# EUROPEAN PATENT SPECIFICATION

(11) **EP 3 201 656 B1**
(45) Date of publication and mention of the grant of the patent: **01.07.2020**
(21) Application number: 15846369.5
(22) Date of filing: 01.10.2015
(51) Int. Cl.: G01W 1/10

(54) **RADIATION COOLING/HEAT TRANSFER-BASED METHODS, SENSORS AND SYSTEMS FOR FORECASTING AND/OR DETECTING ACTIVE FROST CONDITIONS**
STRAHLUNGSKÜHLUNGS-/WÄRMEÜBERTRAGUNGSBASIERTE VERFAHREN, SENSOREN UND SYSTEME ZUR VORHERSAGE UND/ODER ERKENNUNG VON AKTIVEN FROSTZUSTÄNDEN
PROCÉDÉS, CAPTEURS ET SYSTÈMES S'APPUYANT SUR LE TRANSFERT DE CHALEUR/REFROIDISSEMENT PAR RAYONNEMENT POUR PRÉVOIR ET/OU DÉTECTER DES CONDITIONS GIVRANTES

(30) Priority: 01.10.2014 US 201462058247 P
(43) Date of publication of application: 09.08.2017
(73) Proprietor: Horrigan, John, Pointe Claire, Québec H9R 5N3 (CA)
(72) Inventor: Horrigan, John, Pointe Claire, Québec H9R 5N3 (CA)
(74) Representative: Guardian IP Consulting I/S
(86) International application number: PCT/CA2015/050986
(87) International publication number: WO 2016/049767

(56) References cited:
- WO-A1-2015/013822
- DE-A1-102007 033 947
- DE-A1-102008 051 558
- DE-A1-102008 051 558
- JP-A- 2000 009 855
- US-A- 5 299 867
- US-A- 6 157 305
- US-A- 6 157 305
- US-A1- 2013 205 891
- US-B1- 6 292 140
- US-B1- 6 328 467
- US-B2- 6 744 268
- XU ET AL.: 'Frost formation mechanism analysis and frost growth prediction on ground aircraft.' HEAT AND MASS TRANSFER vol. 49, no. 10, October 2013, pages 1385 - 1393, XP009501522

## Description

### FIELD OF THE INVENTION

The invention pertains to the field of aircraft critical surface contamination, and in particular, to radiation cooling/heat transfer-based methods, sensors and systems for forecasting and/or detecting active frost conditions that provide information to assist aircraft de-icing operations including warnings or indications of current and/or future weather conditions conducive to critical surface frost accretion.

### BACKGROUND OF THE INVENTION

Frost can be undesirable in a number of applications and in particular, in the airline industry where, globally, approximately 1/3 of all aircraft deicing operations are performed to remove frost from critical aircraft surfaces. At some airports, frost removal can account for over 75% of deicing events.

Frost has a significant negative impact on aerodynamics. The height and close spacing of frost crystals over a wing surface can be such that it disturbs the airflow much more severely than other forms of frozen contamination. The aerodynamic effect of frost on lift is most pronounced when frost is located on or near a wing's leading edge. In this case, the aircraft is unlikely to achieve required climb performance, which may render takeoff or sustained post-takeoff climb impossible. Thus, frost affects an aircraft's performance and handling qualities and can prove to be lethal irrespective of the size of the aircraft involved.

Lift can decrease by as much as 30% with an attendant rise in drag by as much as 40%. Airflow disturbance caused by frost can also result in control difficulties, especially if the frost is asymmetrically distributed from wing to wing, such as might be the case if one wing was in the early morning sunlight and the other was in the shade.

The Society of Automotive Engineers (SAE) sub-committee AC-9C defines frost as "ice crystals formed on a surface by water vapour deposition from the atmosphere." Transport Canada expands on this, describing frost as "a thin white deposit of frozen precipitation which is of fine crystalline texture, that adheres to exposed surfaces usually during below freezing, calm winds, cloudless nights with air of high relative humidity and with no precipitation falling. Often the frost deposit is thin enough for surface features underneath, such as paint lines, to be distinguishable."

Frost forms by deposition of water vapour onto a surface directly from vapour to solid without passing through the liquid stage. Deposition occurs when a surface's temperature falls below the frost point of the air above it. The surface can be cooled to below the frost point in several ways including cold soaking the wing or radiation cooling. The formation of frost does not require 100% relative humidity. In fact, Transport Canada tests suggest that the most rapid frost formation occurs near 75% relative humidity. Testing sponsored by Transport Canada has further revealed that the upper surface of a wing can be as much as 8°C colder than the ambient air temperature due to radiation cooling at night. Operational crews need to be aware that these conditions are conducive to the formation of frost. The lower the outside air temperature, the more tenaciously the frost appears to adhere to the surfaces.

Active frost conditions are defined as the environmental conditions required for the formation of frost. Once active frost conditions have ceased (i.e. environmental conditions do not support frost formation), any remaining frost is defined as residual frost.

Frost occurs when the surface temperature of an object is below the frost point. Frost point is determined by outside air temperature (OAT) and relative humidity (RH). Frost point is related to, but not equal to, dew point. Whereas dew point equates effectively to a 100% relative humidity, at temperatures below 0°C, frost point occurs at a warmer temperature than dew point. This difference is significant, as aviation weather reports include only dew point, and thus do not directly provide an indication of the temperature at which frost will occur.

The frost point (also referred to as 'icing temperature' in some material) is similar to the dew point, in that it is the temperature to which a given parcel of humid air must be cooled, at constant barometric pressure, for water vapor to be deposited on a surface as ice without going through the liquid phase. The frost point for a given parcel of air is always higher than the dew point, at temperatures below 0°C, as the stronger bonding between water molecules on the surface of ice requires higher temperature to break.

Active frost conditions are generally associated with the following conditions:
Sky Condition: Clear, or with few clouds with high bases;
Absence of radiant heat sources (e.g. direct sunlight);
Outside Ambient Temperature: Below 5°C;
Dew point below 0°C;
Frost Point 5°C or less below OAT;
Wind Speed: Less than 10 nautical miles per hour (18 km/h).

Currently no standardized technology or manual approach is being used in aircraft operations to determine active frost conditions. Typically forecast weather conditions are monitored for an indication of whether or not frost formation is likely and the resulting probability is used in planning processes. However, once frost is discovered, usually through visual inspections of aircraft surfaces, there are no methods to reliably determine whether it is active frost (i.e. conditions for continued frost formation persist).

In the airline industry currently, if a flight is departing during active frost conditions, not only does any existing frost have to be removed from critical surfaces, but the pilot must ensure that the fluids applied provide sufficient holdover time (HOT) for the aircraft to depart. In current practice, this requires the use of anti-icing fluids which are expensive, have significant negative environmental impacts and usually result in increased aircraft turnaround times.

Determining the onset and completion of active frost conditions is critical to aircraft operations, as active frost conditions require different strategies for aircraft de/anti-icing and pre-flight servicing of the aircraft. Residual frost can be removed from critical aircraft surfaces without concern for reoccurrence. Depending on outside ambient temperatures, it is possible to remove frost without using freeze point depressant fluids, so called deicing or anti-icing fluids, such as propylene glycol, ethylene glycol or others known in the art. Reducing the use of deicing or anti-icing fluid when removing residual frost reduces costs and negative environmental impacts, while permitting quicker turnaround times and/or less aircraft delays.

Within the airline industry, aircraft turnaround time, or the task of getting an aircraft to "wheels up" (safely) is of primary importance as any delays on a single flight could delay the aircraft's subsequent flights for the day and a delay in any flight could result in passengers or cargo missing connecting flights. For this reason, airlines often incur extra costs to reduce the risks of delays in "wheels up" time. With respect to frost conditions, there are no reliable indications for active frost. In the absence of knowledge of whether frost is active or passive, airlines need to make the conservative assumption that the frost is active and to treat it accordingly. At some airports, overnighting aircraft are uniformly coated with anti-icing fluid every night to prevent frost formation.

The methods, sensors and systems described herein will be used to tell flight crews, airport operators, regulators, other meteorological agencies and other stakeholders about whether or not active frost conditions are present at airport sites.

Frost detection systems and methods have been used previously in agriculture, generally limited to the temperature range at and above the freezing point of water.

For example, US Patent No. 6,157,305 discloses a crop frost prediction system which exposes a thermally radiant surface to atmosphere and senses the temperature of the surface from which the likelihood of frost is predicted. US Patent No. 6,292,140 relates to an antenna for a bolometer integrated on a silicon chip. An opening in the silicon chip is spanned by two separate thermally isolated structures. A thin-film antenna, comprising two parts, is located on the structures with one antenna part on each structure. Radiation received in the larger of the two antenna parts is coupled electromagnetically into the smaller part, where it causes a current to flow that is dissipated as heat. A thin-film thermometer measures the temperature rise of the smaller antenna part, due to the dissipated heat.
This background information is provided for the purpose of making known information believed by the applicant to be of possible relevance to the present invention. No admission is necessarily intended, nor should be construed, that any of the preceding information constitutes prior art against the present invention.

### SUMMARY OF THE INVENTION

An object of the present invention is to provide radiation cooling/heat transfer-based methods, sensors and systems for forecasting and/or detecting active frost conditions. In accordance with an aspect of the present invention, there is provided a system for detecting active frost conditions according to claim 1.

### BRIEF DESCRIPTION OF THE DRAWINGS

These and other features of the invention will become more apparent in the following detailed description in which reference is made to the appended Figures.
Figure 1 is a schematic illustrating one embodiment of the system **10** to detect active frost conditions including a radiation-cooling sensor **100**, an outside ambient temperature (OAT) sensor **200** and a processor **250**. Also shown is dew point/relative humidity sensor **210** and atmospheric pressure sensor **220**.
Figure 2 is a schematic illustrating one embodiment of the system to detect active frost conditions at multiple locations detailing at least one central calibration unit **50** and at least one distributed unit **75**. Also shown is the central processor **260**.
Figure 3 illustrates an embodiment of the active frost detection and warning system.
Figure 4 illustrates an embodiment of a system for predicting active frost weather comprising a calibration unit **410** and test unit **420** both of which are operatively connected to a processor **430** configured to determine rate radiation cooling and optional time to frost point. Also shown are OAT sensor **435**, optional dew point/% relative humidity sensor **440**, optional wind sensor **445**, temperature sensor **412** and vacuum line **450**.
Figure 5 illustrates the calibration unit of one embodiment of the system for predicting active frost weather.
Figure 6 illustrates the test unit of one embodiment of the system for predicting active frost weather.

### DETAILED DESCRIPTION OF THE INVENTION

### Overview of the System:

The radiation cooling/heat transfer-based methods, sensors and systems for forecasting and detecting active frost conditions provide for the forecasting and/or detection of active frost conditions based on a determination of the rate of radiative cooling/heat transfer of a sensor and predicting the likelihood of active frost conditions from this determination, in view of outside ambient temperature, frost point temperature and other conditions. Because active frost risk is tied to the overall heat transfer for a given surface, the specific vertical radiation transfer component is isolated centrally, while parameters pertinent to the location and solar exposure of a critical surface at a specific location within the same airmass is distributed.

Minimum parameter recovery within this system can vary with the installation. All central calibration units will generally have isolated, heated and temperature tracked comparative radiating surfaces. In some embodiments, where the environment has an unusually high or low concentration of particulates in the air, transmissivity can be added to the central location. For locations where many aircraft have common characteristics, such as a large airline hub, one or more surface-specific correlation units can augment the calibration unit to provide more precise data. This would likely be the case where operators use aircraft that embody composite materials on spoiler panel surfaces. As these surfaces tend to accrete frost more quickly than metal surfaces, the operator may benefit from having a composite correlation unit installed.

According to some embodiment, the system comprises a central calibration sensor suite. The central calibration suite may comprise a grey body radiating surface with known emissivity in the infrared range where the emissivity value is approaching zero; a grey body radiating surface with known emissivity in the infrared range where the emissivity value is approaching 100%; optionally a grey body comprised of the specific surface material and finish that is of concern; a precise temperature measurement system to track real time temperatures of all radiating surfaces; optionally a precise temperature measurement system to track heat transfer from the radiating surfaces to the walls of the calibration chamber housing the radiation surfaces; a means of heating all surfaces to a common temperature; a comparator to measure the temperature differences between surfaces as they cool; a means to isolate the radiating surfaces from ambient conditions and irrelevant heat or cold sources; a means to protect the sensor from damaging atmospheric phenomena outside its useful conditions; a means to assess the rate of heat transfer of the high emissivity grey body based on a computational algorithm taking cooling data as inputs and optionally a means to assess atmospheric infrared transmissivity. The means to assess atmospheric infrared transmissivity may be useful for unique environments such as high altitude or maritime locations.

Distributed sensors will capture site specific temperature, dew point or relative humidity, and wind. Optionally, this data can be augmented by calculated solar angle and building data to predict solar exposure and shade. The effective area of a distributed sensor will vary with the design of the terminal or aircraft parking area. Active frost conditions for a specific site are predicted when the overall heat transfer equation, incorporating heat lost through radiation and heat gained from ambient conditions, indicates that a critical surface is losing heat and will reach the frost point at a predictable point in the future. The system is configured to accurately measure the rate of radiation heat transfer to space within a defined geographic region sharing common atmospheric characteristics (ambient air pressure, temperature, humidity, suspended particulate content, cloud cover and cloud height(s)). The distributed sensors may be located near critical areas of concern to measure local winds, temperature, atmospheric pressure and humidity.

In some embodiments, the system is configured to correlate ambient atmospheric conditions, conductive and convective heat transfer components to upward facing aircraft components of interest to determine if a risk of frost formation on aerodynamically critical surfaces exists, regardless of outside temperature (active frost conditions). Where active frost conditions have been declared or are likely, the system may be further configured to determine the time to frost accretion for an untreated surface at a known temperature (including a surface that has been actively warmed using a heat transfer process of any kind); or a surface that has been treated with an anti-icing or de-icing process.

This invention provides an apparatus or sensor for use in detecting active frost conditions and a system comprising the same. The system for detecting active frost conditions comprises one or more modules, components, apparatus or sensors, which optionally can be linked to third party systems and/or receive data from third parties, including for example meteorological data. The design of the system can be such that individual modules, components, apparatus or sensors can be replaced or components added to the system as requirements change.

The system may comprise a central processing and information distribution processor incorporating sensor input, accurate information regarding the site specific solar cycle, building heights, locations, and locations and orientations of aircraft stands.

In some embodiments, the system comprises or is operatively associated with a means to distribute advisory information regarding impending frost conditions, expected time to frost accretion while in active frost conditions, for a given initial critical surface temperature, and expected time of exit from active frost conditions, specific to a given or range of aircraft stand locations.

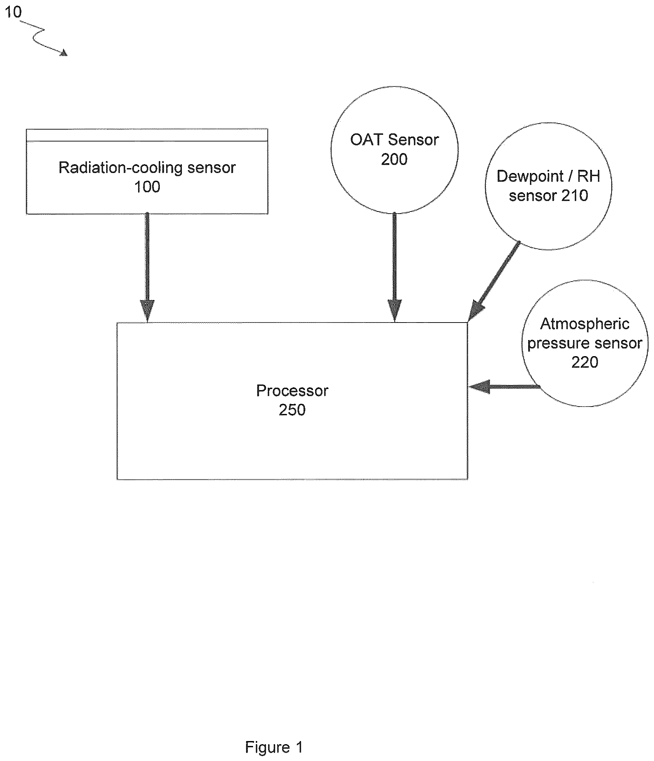

Referring to Figure 1, the system **10** for detecting active frost conditions comprises one or more radiation/heat transfer-cooling sensors **100**, one or more sensors for measuring outside ambient temperature **200**, dew point or relative humidity **210** and atmospheric pressure sensor **220** and a processor **250** configured to determine if active frost conditions are present or imminent. In some embodiments, the processor is a component of the sensor.

Optionally, the system comprises and/or is operatively associated with an alarm/warning system configured to issue a warning when the outside ambient temperature is below a set point where frost may occur and if the rate of radiation-cooling of the sensor is indicative of active frost conditions now or imminent. The alarm/warning system is optionally configured to issue regular updates on conditions.

In some embodiments, the system comprises a user interface. Optionally, the system can be interfaced with third party system to provide for input of additional data including satellite images and meteorological damage The system may be configured to receive and transmit data, information, warning or the like to remote locations.

The system may further comprise additional sensors for assessing weather conditions. The additional sensors include means for measuring dew point, such as those commercially available from many manufacturers (e.g. Rotronic, Beko and Vaisala), means for measuring wind speed and/or wind direction; a means for estimating cloud cover such as one or more solar radiation sensors; and one or more ground-based all-sky cameras.

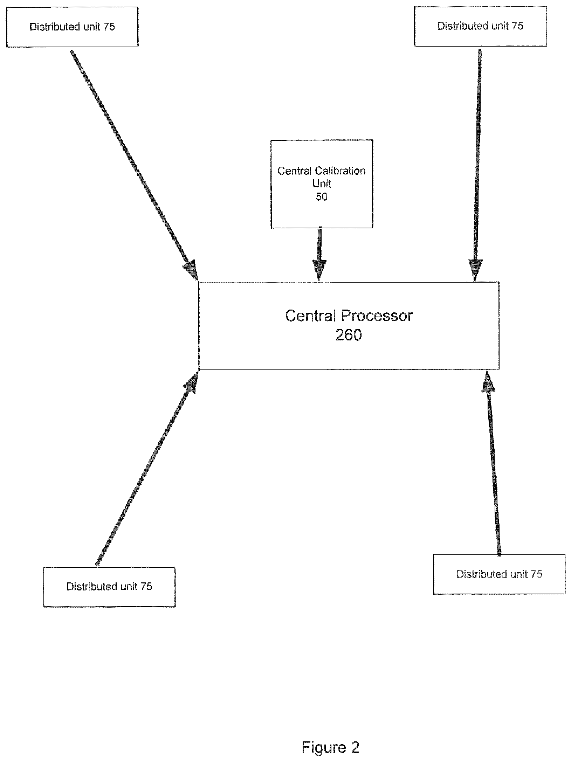

Referring to Figure 2, in one embodiment the frost detection system comprises an array of sensors or weather stations which optionally includes a main or central sensor/station and one or more peripheral or distributed sensors/stations situated in close proximity to aircraft gates or stands.

In such embodiments, the system may be configured to assess active frost conditions at multiple locations. Optionally, the system can be configured such that the assessment of active frost conditions occurs continuously, at intervals or only when the location (for example, gate) is in use. Sensors may incorporate self-protective features to avoid damage from conditions outside their safe operating range. Additionally, sensors can be remotely activated or shut down when not required (for example, seasons when frost does not occur, or when heavy precipitation is anticipated).

In such embodiments, one or more radiation cooling/heat transfer sensors **100** and optionally one or more outside ambient temperature sensor **200** are placed at locations in which active frost conditions are to be assessed, such locations, for example, at large airports are individual terminals or gate areas. Optionally, data regarding local conditions is relayed or forwarded to a central processor **260**. In some embodiments, a determination of active frost condition status occurs prior to rely to the central processor.

Optionally, the main or central sensor is configured to isolate the maximum possible component of radiation heat transfer to the sky, for a calibrated, high emissivity gray or black body, for the specific site. In such embodiments of the system, there will typically be one maximum radiation heat transfer sensor per system. In some embodiments, the central calibration sensor provides the radiation component of the heat transfer equation, while distributed sensors form the source for conductive and convective heat transfer components.

The main or central sensor or station may include a group of weather reporting tools or sensors, for example, including those that measure ambient temperature, dew point, visibility and air quality.

Similarly, the distributed sensor may be a group of weather reporting tools or sensors situated in close proximity to aircraft gates or stands, with number and location of individual sensors or stations dependent on local sunrise, sunset and wind patterns.

In some embodiments, each distributed sensor reports on one or more of local ambient temperature, frost point and/or dew point, local wind speed and direction. Optionally, local stations include a radiation transfer sensor calibrated for a specific aerodynamic component. This may be desirable where components, such as spoiler panels, are comprised of composite materials with unusual thermal conductivity or skin treatments with unusual, but know emissivity.

In some embodiments, the central processor is configured to consider the input from the array and outputs risk threshold information and treatment recommendations for the areas specified by the distributed sensors or for the airport as a whole. Because active frost risks can vary greatly over a short distance, (for example, a side of an airport terminal that is exposed to the rising sun while the opposite side remains in shade), frost risk and time indications will reference specific sites. The number and distribution of remote sensors may be varied in view of airport architecture and aircraft parking locations.

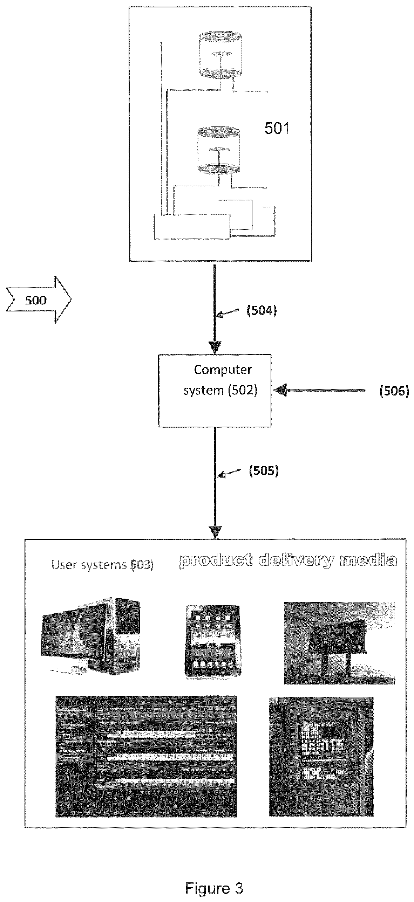

The frost detection and warning system may be integrated into a larger system or with other systems. Figure 3 illustrates an embodiment of the frost detection and warning system that could be used in aircraft de-icing as an example of the invention. The frost warning system **500** includes weather sensors **501**, computer system **502**, user systems **503**, and communication links **504-506**. Weather sensors **501** transfer weather data to the computer system **502** over link **504**. The computer system **502** transfers information to user systems **503** over link **505**. A weather information service, a de-icing information system, a facilities management system or other system (not shown) may also transfer data to the computer system **502** over link **506**.

Weather sensors **501** include one or more of the radiation-cooling active frost sensor described above and may also include sensors to measure outside ambient temperature, relative humidity, wind speed, dew point, precipitation type, or some other weather measurement. This weather data may also come from other systems over link **506**.

Weather sensors **501** may be individual units or may be distributed among multiple components and locations. There could be one or many such sensors. For detection of active frost, multiple sensors could be located to have varying exposure to direct sunlight and this could be factored into the warning system to provide intermediate levels of active frost warning.

As there are advances in commercially available instrumentation, it will be possible to obtain other environmental measurements to indicate active frost conditions and these could be added or substituted for the weather sensors in **501**. For example, measurements and calculations to quantify radiation cooling could be weighed against a quantification of convective heat transfer to determine whether active frost conditions are present.

The computer system **502** may be any programmed general purpose computer or any special purpose circuitry and equipment as there are many different architectures fit for the purpose. In some examples, the computer system **502** will collect the data, and perform the calculations required to determine whether active frost conditions are present and will generate the data, warnings and information required by the user systems **503**.

Communications links **504-506** could use wireless, optical, or some other type of data communication mechanism. Communication links **504-506** could use dedicated links or could be part of a larger communication network. Communication links **504-506** could share some data transfer equipment.

A wide variety of product delivery media could be used in the user systems 503 including personal computers, tablets, smart phones, electronic sign boards, cockpit communications systems, audio systems, etc. The system outputs, such as an active frost warning, can be sent to the flight deck using ACARS or other forms of datalink, via the internet and received using tablets, mobile devices or computers. Information can also be sent to electronic message boards at the deicing positions or at gate locations.

In the context of aircraft de-icing, user systems could be in the de-icing facility, the cockpit, the control tower, airport administration or other location. Levels of warnings could be tailored to specific users and applications. End users could include flight crews, ground de-icing personnel, ground operations personnel, airport administration, airline administration, and tower personnel.

### Radiation Cooling / Heat Transfer Sensor:

The radiation-cooling sensor is configured to determine the rate of cooling of the sensor or part thereof due to radiation heat transfer. This sensor is located centrally and away from heat or cold sources that would affect readings, permitting an accurate assessment of the actual radiation cooling component. The radiation cooling/heat transfer sensor is configured such that the radiating surfaces are isolated from all ambient conditions except the radiation cooling aspect in order to ensure that only that component of the overall heat transfer equation is captured. The rate of cooling is continuously monitored or repeatedly assessed to identify an impending risk of active frost conditions.

The rate of cooling due to radiation heat transfer is combined with the site specific sensor values for convective and conductive heat transfer to predict a time in the future when the temperature of the surface of interest would drop to the frost point. Optionally, a warning is provided by the system to indicate that active frost conditions are approaching, to forecast a time in the future when they might occur and to advise when active frost conditions have ceased for one or more sites, allowing residual frost removal methodologies to commence.

In some embodiments, the radiation-cooling sensor together with measurements of outside ambient temperature provides for the detection of conditions conducive for active frost formation.

The radiation-cooling sensor comprises a material of known conductivity in a near vacuum operatively associated with one or more means for assessing the temperature of the material. One of skill in the art, would appreciate what type of material would be appropriate for use in the sensor, exemplary materials include copper foil.

In some embodiments, the means of assessing temperature is a temperature sensor which directly measures the temperature of the material. Any suitable temperature sensor can be used. A variety of commercially temperature sensors are available. In some embodiments, the temperature sensor is a thermistor. Alternatively, an RTD or sensor of similar accuracy may be used. Temperature sensors must be capable of accuracy better that 0.1 °C from +5 to -45°C.

Alternatively, the means of assessing temperature comprises a means for measuring electrical or heat input necessary to maintain the copper foil or aircraft material at a constant temperature.

In some embodiments, all radiating surfaces in the calibration units are first subjected to a heating cycle to raise their temperatures to a known value. The heating cycle is terminated and the temperature of the radiating surfaces is allowed to fall with the primary means of heat transfer being via radiation. Optionally, heat loss to surroundings in the calibration unit is also tracked via separate temperature sensors. The temperature curve will have the general shape of Newton's Law of Cooling with the slope defined by the Stephan-Boltzmann constant. This curve is extrapolated in real time with the predicted temperature correlated with actual readings using a Kalman methodology, ultimately yielding a reliable temperature/time chart.

In some embodiments, the temperature sensor in the calibration and/or test unit is replaced by a means for measuring electrical or heat input necessary to maintain the copper foil or aircraft material at a constant temperature. In such embodiments, a means for providing electrical or heat input to the copper foil or aircraft material is provided. Examples of such sensors are found in U.S. Patent No. 6,328,467.

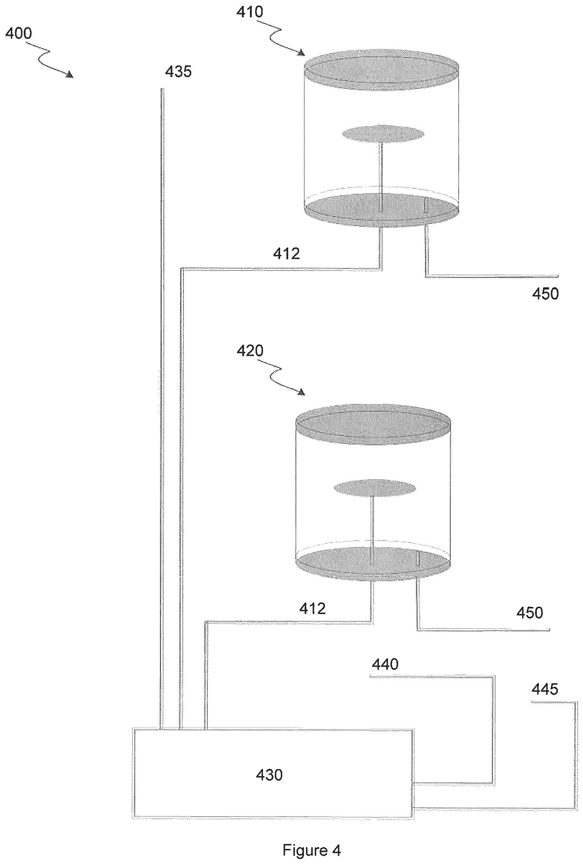

Referring to Figure 4, the system for predicting active frost weather conditions is generally depicted by reference numeral **400**. The illustrated system **400** comprises a calibration unit **410** and test unit **420** both of which are operatively connected to a processor **430** configured to determine rate radiation cooling.

In an alternative embodiment, the calibration unit and test unit are housed in the same container. Optionally, in such an embodiment a copper foil and aircraft material is vacuum sealed in the same container.

In according to some embodiments, the test unit is calibrated off site In such embodiments, the system may optionally include a unit for on-site calibration.

According to some embodiments, once standard cooling curves are obtained prediction of time until active frost can be made by comparing cooling of a single unit with previously obtained data in silico. Similarly, once the correlation between aircraft material and flat black copper strip the system may be configured to determine time until active frost using a unit similar in configuration to the calibration unit.

The system optionally further comprises one or more of dew point and/or percent relative humidity sensor(s) **440**, wind speed and/or wind direction sensor(s) **445**, means for measuring precipitation, means for estimating cloud cover such as one or more solar radiation sensors; and one or more ground-based all-sky cameras and atmospheric temperature sensors. The system further comprises or is operatively associated with processing means and communication means.

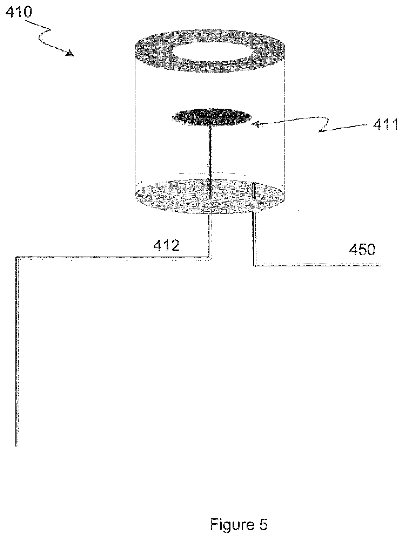

Referring to Figure 5, the calibration unit **410** comprises a polished copper surface, approximately the thickness of foil **411** with very low infra red emissivity and known conductivity vacuum sealed in a chamber optionally with a removable lid, equipped with a non-conductive material of known infrared transmissivity. A comparative radiating surface consists of identical copper material with a thin surface coating with infrared emissivity of equal to or greater than about 0.98. both copper surfaces are operatively connected a temperature sensors **412**. In some embodiments, the calibration unit is operatively connected to a calibrated heating and/or cooling source or unit. In embodiments, where the calibration unit is connected to a cooling system that will cool the sensor by a known rate, the system is optionally configured to provide an auto calibration cycle.

In some embodiments, the black copper strip comprises a polished copper strip of very low emissivity (less than about 0.05) shielded from the wind, optionally at the end to provide an outside ambient temperature without convection. Alternatively, the calibration unit further comprises a polished copper strip shielded from the wind. In such embodiments, the radiation cooling component can be determined by comparing the temperature of the black copper strip with that of the polished copper strip.

In some embodiments, the vacuum chamber is equipped with additional capability to measure heat transferred from the copper radiating surfaces to the chamber walls. This is generally achieved through the use of one or more additional temperature sensors operatively attached to the chamber walls.

The system may further comprise a sensor having a polished copper strip exposed to ambient wind but not exposed to sky. Other optional or peripheral components include sensor comprising a flat black copper strip exposed to the complete environment.

In some embodiments, the vacuum seal is a partial vacuum seal sufficient to prevent frost formation and interruption of radiation cooling. Optionally, the calibration unit includes a removable lid to allow access to internal components.

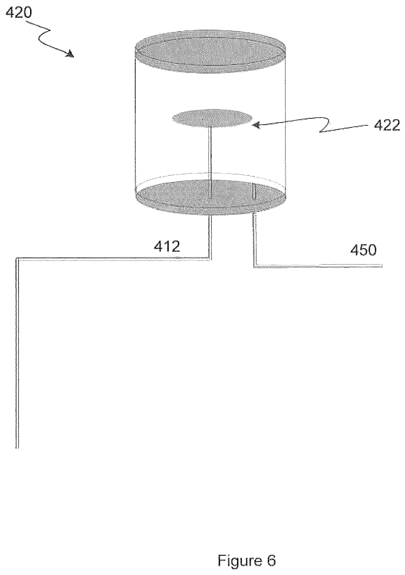

Referring to Figure 6, the test unit **420** comprises aircraft material **422** optionally including insulation and coating or paint to match the operational installation of the critical surface of interest. The emissivity of the surface as prepared is established via specific measurement prior to installation in the sensor. The aircraft material is operatively connected to a temperature sensor 412. In some embodiments, the vacuum seal is a partial vacuum seal sufficient to prevent frost formation and interruption of radiation cooling. Optionally, the test unit includes a removable lid to allow access to internal components.

The system can optionally comprise a processor configured to assess the change in temperature, including one or more of total changes in temperature, change in temperature due to radiation cooling only, change in temperature due to convection and conduction. In some embodiments, the temperature sensed by one or more of the above described sensors is plotted as a function of time. Optionally, the slope or rate of change of temperature is determined. From the rate of change the time to threat impact is predicted.

In one embodiment, the sensor comprises an evacuated container enclosing two instrumented strips of identical metal, one strip treated to maximise infrared emissivity, the other strip treated to minimise infrared emissivity. One end of the sensor incorporates an infra-red transmissive material that is able to withstand both vacuum and low temperature and may incorporate protective measures to avoid frost accretion itself, such as heated airflow or equivalent methods. Optionally, the metal strips may incorporate heating methods to initially raise their starting temperature to a known, calibrated value from which to assess rate of change.

In some embodiments, the sensor incorporates protective measures against damage from direct sunlight, falling precipitation, and/or high ambient temperature (above 15°C).

Optionally, the sensor is configured to support data feed from heat inputs and temperature outputs. In some embodiments, the sensor may be configured using a collection of devices, each capable of measuring the infra-red radiating power at a given, known temperature. The primary infra-red wavelength targeted by this device will be from about 7 to about 14 microns, however alternate bands may be employed to measure rates of atmospheric absorption.

Relative humidity measurements will be obtained from a DIIS or another relative humidity sensing device located nearby. If radiation cooling is occurring, and the relative humidity is high enough (the relative humidity needed to generate frost depends on ambient temperature), then the cone of the frost sensor will begin to accrete frost.

If the surface temperature of the cone is less than the frost point or icing temperature, as calculated by established methods, tables or formulas which depend on the outside ambient temperature and the relative humidity, then a signal or alarm will be generated to warn of the likelihood of active frost conditions.

## Claims

1. A system (10, 400, 500) for detecting active frost conditions comprising:
a processor (250, 260, 430) configured to determine if active frost conditions are present or imminent, the system being **characterised in that** it comprises a calibration unit (50, 410) comprising:
a vacuum sealed chamber, and two copper foils (411) sealed in the chamber; wherein
the first copper foil is a polished copper foil of known conductivity and the second copper foil has a thin surface coating with infrared emissivity of equal to or greater than about 0.98; wherein each copper foil is operatively associated with a means (412) for assessing temperature of the copper foil,
and **in that** the system (10, 400, 500) further comprises at least one test unit (420), each test unit comprising:
a vacuum sealed chamber, and
a strip of aircraft material (422) sealed in the chamber of the test unit operatively associated with a means (412) for assessing temperature of the material.

2. The system of claim 1, comprising one or more sensors (200, 435, 501) for measuring outside ambient temperature.

3. The system of any one of claims 1 to 2, comprising one or more sensors (210, 440, 501) for measuring dew point or relative humidity, one or more atmospheric pressure sensors (220, 501) and/or one or means (445, 501) for determining wind speed.

## Patentansprüche

1. System (10, 400, 500) zum Erfassen aktiver Frostzustände, umfassend:
einen Prozessor (250, 260, 430), der konfiguriert ist, um zu bestimmen, ob aktive Frostzustände vorhanden sind oder bevorstehen, wobei das System **dadurch gekennzeichnet ist, dass** es eine Kalibriereinheit (50, 410) umfasst, umfassend:
eine vakuumversiegelte Kammer und zwei Kupferfolien (411), die in der Kammer versiegelt sind; wobei
die erste Kupferfolie eine polierte Kupferfolie mit bekannter Leitfähigkeit ist und die zweite Kupferfolie eine dünne Oberflächenbeschichtung mit einem Infrarot-Emissionsvermögen von gleich oder größer als etwa 0,98 aufweist; wobei jede Kupferfolie mit einem Mittel (412) zur Bewertung der Temperatur der Kupferfolie funktionsfähig verbunden ist,
und dass das System (10, 400, 500) weiter mindestens eine Testeinheit (420) umfasst, wobei jede Testeinheit umfasst:
eine vakuumversiegelte Kammer, und
einen Streifen aus Flugzeugmaterial (422), der in der Kammer der Testeinheit versiegelt ist, der mit einem Mittel (412) zur Bewertung der Temperatur des Materials funktionsfähig verbunden ist.

2. System nach Anspruch 1, umfassend einen oder mehrere Sensoren (200, 435, 501) zur Messung der äußeren Umgebungstemperatur.

3. System nach einem der Ansprüche 1 bis 2, umfassend einen oder mehrere Sensoren (210, 440, 501) zur Messung des Taupunktes oder der relativen Feuchtigkeit, einen oder mehrere Atmosphärendrucksensoren (220, 501) und/oder ein oder mehrere Mittel (445, 501) zur Bestimmung der Windgeschwindigkeit.

## Revendications

1. Système (10, 400, 500) pour détecter des conditions de gel actif comprenant :
un processeur (250, 260, 430) configuré pour déterminer si des conditions de gel actif sont présentes ou imminentes, le système étant **caractérisé en ce qu'**il comprend une unité d'étalonnage (50, 410) comprenant :
une chambre étanche à vide, et deux feuilles de cuivre (411) scellées dans la chambre; dans lequel la première feuille de cuivre est une feuille de cuivre poli de conductivité connue et la seconde feuille de cuivre présente un revêtement superficiel mince ayant une émissivité infrarouge supérieure ou égale à environ 0,98 ; dans lequel chaque feuille de cuivre est associée de manière fonctionnelle à un moyen (412) pour évaluer la température de la feuille de cuivre,
et **en ce que** le système (10, 400, 500) comprend en outre au moins une unité de test (420), chaque unité de test comprenant :
une chambre étanche à vide, et
une bande de matériau aéronautique (422) scellée dans la chambre de l'unité de test associée de manière fonctionnelle à un moyen (412) pour évaluer la température du matériau.

2. Système selon la revendication 1, comprenant un ou plusieurs capteurs (200, 435, 501) pour mesurer une température ambiante extérieure.

3. Système selon l'une quelconque des revendications 1 à 2, comprenant un ou plusieurs capteurs (210, 440, 501) pour mesurer un point de rosée ou une humidité relative, un ou plusieurs capteurs de pression atmosphérique (220, 501) et/ou un ou des moyens (445, 501) pour déterminer la vitesse du vent.
